(19) **Europäisches Patentamt / European Patent Office / Office européen des brevets**

(11) **EP 3 912 520 B1**

(12) **FASCICULE DE BREVET EUROPEEN**

(45) Date de publication et mention de la délivrance du brevet:
**21.12.2022 Bulletin 2022/51**

(21) Numéro de dépôt: **21184975.7**

(22) Date de dépôt: **02.02.2018**

(51) Classification Internationale des Brevets (IPC):
**A47J 27/04** (2006.01)   **A47J 27/08** (2006.01)
**A47J 27/62** (2006.01)   **G01N 33/02** (2006.01)
**A23L 5/10** (2016.01)

(52) Classification Coopérative des Brevets (CPC):
**A47J 27/04; A23L 5/17; A23L 7/1975;**
**A47J 27/0802; A47J 27/62;** A47J 2027/043

(54) **PROCÉDÉ DE CUISSON AVEC MODÈLE PRÉDICTIF**

KOCHVERFAHREN MIT VORHERSAGEMODELL

COOKING METHOD WITH PREDICTIVE MODEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.02.2017 FR 1750951**

(43) Date de publication de la demande:
**24.11.2021 Bulletin 2021/47**

(62) Numéro(s) de document de la (des) demande(s) initiale(s) en application de l'article 76 CBE:
**18707082.6 / 3 576 584**

(73) Titulaire: **SEB S.A.**
**69130 Ecully (FR)**

(72) Inventeur: **GOYON, Annabelle**
**30980 Saint-Dionisy (FR)**

(74) Mandataire: **SEB Développement**
**Direction Propriété industrielle - Brevets**
**112, chemin du Moulin Carron**
**Campus SEB - CS 90229**
**69134 Ecully Cedex (FR)**

(56) Documents cités:
**WO-A1-2012/056173      WO-A1-2015/135788**
**WO-A1-2016/083716      FR-A1- 2 996 986**
**JP-A- 2004 321 215      US-A1- 2011 003 048**
**US-A1- 2016 081 515**

**Description**

La présente invention concerne les appareils de petit électroménager permettant de cuire des céréales et légumineuses, en particulier du riz, encore appelés « cuiseurs ».

On connaît de nombreux modèles de cuiseurs.

La publication WO 2012/056173 A1 décrit un exemple de cuiseur à riz sous pression permettant d'obtenir des préparations à base de riz ayant une texture adaptée aux enfants de différents âges.

Les demandes WO 2016/083716 et FR 2 996 986 divulguent des procédés de commande d'un cuiseur à riz permettant d'augmenter la quantité d'au moins un des acides aminés du riz blanc cuit, comportant une étape de trempage, une étape de chauffage, et une étape de cuisson.

Le document US 2011/0003048 divulgue un cuiseur à riz capable d'augmenter la teneur en eau dans le riz en augmentant la pression pendant la phase de trempage.

Les programmes de cuisson des cuiseurs connus présentent plusieurs réglages de la fermeté, fondés sur la quantité d'eau ajoutée déterminant le temps de cuisson total. Toutefois, ces cuiseurs ne permettent pas d'atteindre avec toute la précision souhaitée la texture voulue.

L'invention vise à perfectionner encore les appareils de cuisson tels que les cuiseurs et les procédés de cuisson mis en œuvre à l'aide de tels appareils, afin d'atteindre de façon plus précise la texture recherchée, notamment en ce qui concerne l'un au moins des paramètres de texture que sont la fermeté, le collant, la brillance, l'élasticité, l'adhésivité, ou la cohésion, entre autres.

L'invention a ainsi pour objet, selon la revendication 1, un procédé de cuisson d'un aliment d'une variété prédéterminée, notamment de riz, en présence d'eau dans une enceinte de cuisson, dans lequel un programme de cuisson de l'aliment est déterminé automatiquement puis le cuiseur sélectionne un ou des modèles prédictifs correspondant à la variété identifiée, et/ou un programme de cuisson de l'aliment est proposé et/ou rendu sélectionnable pour l'utilisateur par un circuit de contrôle du cuiseur, au moins en partie sur la base d'un modèle mathématique prédictif du comportement d'au moins un paramètre organoleptique de l'aliment, et d'une valeur recherchée pour ledit paramètre, le modèle mathématique prédictif étant fonction au moins d'un ratio eau/aliment initial dans l'enceinte de cuisson, le ratio eau/aliment initial en volume étant compris entre 1.1 et 1.6, le modèle mathématique prédictif étant multi-variable avec des contraintes imposées aux valeurs des variables qui sont solution du modèle prédictif et fonction d'une durée de trempage de l'aliment et/ou de la température de trempage.

Selon l'invention, le procédé de cuisson comporte une étape de détermination automatique de la variété de l'aliment ou son rapprochement d'une variété similaire par son comportement à la cuisson, dans laquelle sont utilisés des moyens d'analyse d'un échantillon de l'aliment, voire de l'aliment à placer dans l'enceinte de cuisson, les moyens d'analyse comportant une enceinte d'analyse, disposée à côté de l'enceinte de cuisson, pour recevoir un échantillon de l'aliment.

L'utilisation d'un modèle prédictif tel que défini ci-dessus permet de faire subir à l'aliment un programme de cuisson, c'est-à-dire un cycle hydro-thermique, conduisant à l'obtention du résultat recherché, notamment d'une texture et/ou du collant recherché.

Le paramètre précité peut être un paramètre de texture.

Le paramètre précité peut être choisi parmi la fermeté, le collant, la brillance, l'élasticité, l'adhésivité, ou la cohésion de l'aliment, étant de préférence la fermeté de l'aliment ou le collant de l'aliment.

Le modèle mathématique précité est par exemple de la forme $z = g(x, y)$, notamment $z = ax + by + c$, où $x$ désigne le ratio eau/aliment initial, $y$ désigne la durée de trempage et $z$ la fermeté. Pour le riz, de préférence $b$ et $c$ sont des constantes positives et $a$ est une constante négative ; dans un tel modèle, l'effet du ratio eau/riz est négatif, c'est-à-dire que lorsque l'on augmente la quantité d'eau pour la cuisson, la fermeté du riz diminue.

Le modèle mathématique peut encore être de la forme $w = f(x, y, T)$, notamment $w = ax + by + c\,xy + dT + e$, où $x$ désigne le ratio eau/aliment initial, $T$ la température de trempage, $y$ la durée de trempage, et $w$ l'adhérence. Pour le riz, les constantes $c$ et $e$ sont négatives et les autres constantes $a$, $b$ et $d$ sont positives. Si l'on raisonne en valeurs absolues, l'effet de la température de trempage est alors négatif, c'est-à-dire que plus la température de trempage est élevée, moins le riz est collant.

De préférence, on permet à l'utilisateur de sélectionner la fermeté recherchée après cuisson, notamment par incréments, en particulier avec plus de 3 valeurs, ou de façon continue.

On peut encore permettre à l'utilisateur de sélectionner l'adhérence recherchée après cuisson, notamment par incréments, en particulier avec plus de 3 valeurs, ou de façon continue.

Le procédé comporte la détermination automatique de la variété de l'aliment ou son rapprochement d'une variété similaire par son comportement à la cuisson, notamment par mesure d'une grandeur relative au gonflement de l'aliment lors de la phase de trempage, en particulier la force de gonflement, la vitesse de gonflement et/ou le taux de gonflement.

Notamment lorsque l'aliment est du riz, le trempage du riz peut s'effectuer à une température prédéfinie et pendant une durée déterminée automatiquement en fonction d'une fermeté et/ou adhérence recherchée, en appliquant au moins un modèle mathématique prédictif reliant la durée de trempage à la fermeté et/ou à l'adhérence en fin de cuisson. Cela vaut également pour d'autres céréales ou légumineuses.

On peut imposer des contraintes aux valeurs des variables qui sont solution du modèle prédictif. Par exemple, on peut imposer à la température de trempage, lorsque présente dans le modèle prédictif utilisé, de rester comprise entre 50 et 80°C. Selon l'invention, on va imposer au ratio eau/riz (en volume) d'être compris entre 1.1 et 1.6. On peut encore imposer à la durée de trempage d'être comprise entre 10 et 50 min.

L'invention pourra être mieux comprise à la lecture de la description détaillée qui va suivre, d'exemples de mise en œuvre non limitatifs de celle-ci, et à l'examen du dessin annexé, sur lequel :

- La figure 1 représente de façon schématique un exemple de cuiseur à riz utilisable dans un procédé selon l'invention, couvercle ouvert,
- la figure 2 est un schéma en blocs d'un exemple de circuit de contrôle d'un cuiseur utilisable dans un procédé selon l'invention,
- la figure 3 est une représentation graphique d'un modèle prédictif de fermeté pour une variété de riz,
- les figures 4A à 4C sont des représentations graphiques de modèles prédictifs d'adhérence pour une variété de riz et pour différentes températures de trempage, à savoir 60°C pour la figure 4B et 75°C pour la figure 4C,
- la figure 5 illustre différentes étapes d'un exemple de procédé de cuisson ne faisant pas partie de l'invention,
- la figure 6 représente de façon schématique l'enceinte d'analyse du cuiseur,
- la figure 7 illustre le traitement des données provenant des moyens d'analyse du cuiseur, et
- la figure 8 illustre différentes étapes d'une variante de procédé de cuisson selon l'invention.

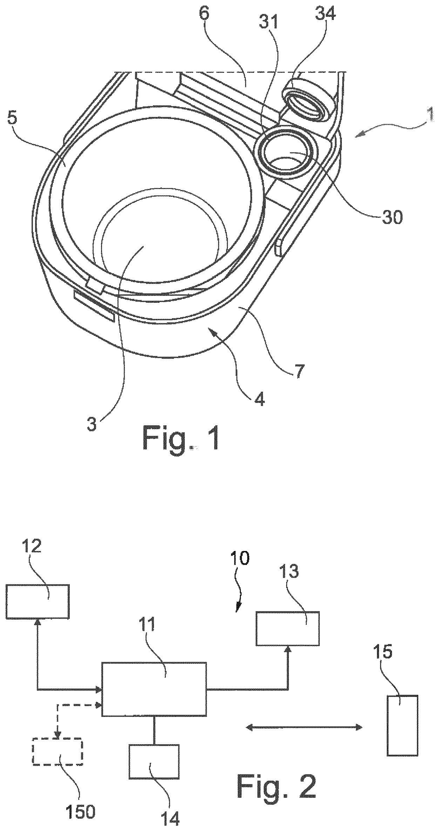

On a représenté à la figure 1 un exemple de cuiseur 1 utilisable dans un procédé selon l'invention, comportant une enceinte de cuisson 3 définie par une cuve 5 logée dans un corps de base 7 du cuiseur, sur lequel est articulé un couvercle 6.

Le corps de base 7 renferme notamment sous la cuve 5 un système électrique de chauffe, non apparent, comportant une ou plusieurs résistances électriques.

La cuve 5 est de préférence montée de façon amovible dans le cuiseur 1.

Le cuiseur 1 comporte un circuit de contrôle 10, représenté schématiquement à la figure 2, comportant une unité centrale 11 à microprocesseur, microcontrôleur ou analogue, communiquant avec une interface homme machine 12, cette dernière comportant par exemple un afficheur et un ensemble de boutons de commande et/ou un écran tactile. L'unité 11 peut également commander une interface de puissance 13 permettant de contrôler le fonctionnement du système de chauffe, afin notamment de porter la cuve à une température de consigne déterminée par l'unité 11.

L'unité centrale 11 dispose d'une mémoire électronique 14, dans laquelle sont stockées des données nécessaires au fonctionnement du cuiseur 1, comme cela va être détaillé plus loin.

Le cas échéant, comme illustré, le cuiseur 1 peut communiquer avec un terminal externe 15, tel qu'un téléphone intelligent par exemple, et/ou avec un serveur distant, par le biais d'une liaison sans fil.

Dans l'exemple considéré, le cuiseur 1 est un cuiseur à riz, mais l'invention s'applique à d'autres aliments en graines.

Le cuiseur 1 est configuré pour adapter le programme de cuisson à la variété de l'aliment et à au moins une propriété recherchée en fin de cuisson, notamment de fermeté et/ou de collant.

Cette adaptation s'effectue sur la base d'au moins un modèle mathématique prédictif du comportement d'au moins un paramètre organoleptique de l'aliment en fonction au moins d'un ratio eau/aliment initial dans l'enceinte de cuisson 3.

Ces modèles peuvent être établis en effectuant des essais de cuisson en faisant varier certains paramètres d'entrée et en analysant l'aliment en fin de cuisson pour mesurer son collant et sa fermeté par exemple.

Une analyse statistique, notamment de variance, permet de trouver les formules de régression qui donnent la valeur du paramètre d'adhérence ou de fermeté en fonction de paramètres d'entrée tels que la durée de trempage, la température de trempage, et le ratio eau/riz initial.

On va décrire plus précisément des exemples de modèles de fermeté et de collant du riz, étant entendu que l'invention n'est pas limitée à des procédés utilisant ces modèles ni à ces paramètres et englobe de façon générale tous paramètres organoleptiques de l'aliment sur lesquels le cycle hydro-thermique subi lors de la cuisson exerce une influence.

Un modèle prédictif de fermeté du riz a été établi, sous la forme $z = z(x, y)$, où $x$ désigne le ratio eau/aliment initial, $y$ désigne la durée de trempage et $z$ la fermeté.

Dans un exemple,

$$z = ax + by + c, \text{ avec } a{<}0, b{>}0 \text{ et } c{>}0. \qquad (1)$$

L'effet du ratio eau/riz est négatif, c'est-à-dire que lorsque l'on augmente la quantité d'eau pour la cuisson, la fermeté du riz diminue.

On a par exemple $-3800{<}a{<}-3000$ $25{<}b{<}30$ et $5800{<}c{<}7000$ pour la variété de riz koshihikari. Un modèle prédictif de collant a été établi, sous la forme $w = f(x, y, T)$, où x désigne le ratio eau/aliment initial, T la température, y la durée de trempage, et w l'adhérence.

Dans un exemple,

$$w = ax + by + c\, xy + dT + e. \quad (2)$$

Pour le riz, les constantes c et e sont négatives et les autres constantes a, b et d sont positives.

Si l'on raisonne en valeurs absolues, l'effet de la température de trempage est négatif, c'est-à-dire que plus la température de trempage est élevée, moins le riz est collant.

On a par exemple $1100{<}a{<}1300$ $60{<}b{<}80$ $-65{<}c{<}-50$ $13{<}d{<}16$ et

$$-3500{<}e{<}-3000.$$

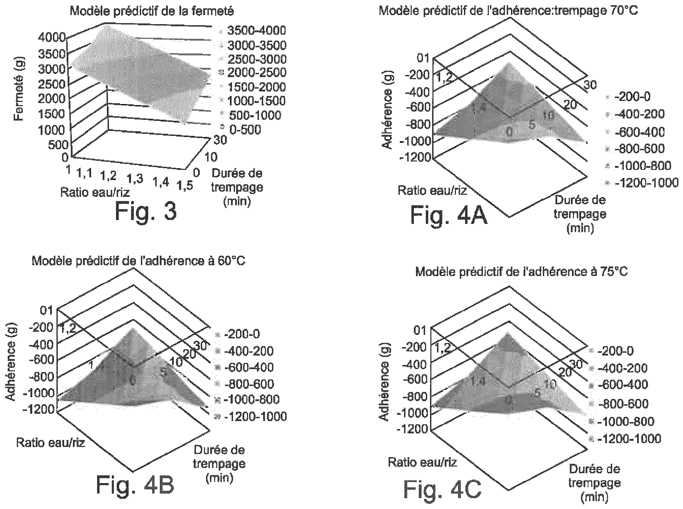

On a représenté à la figure 3 le plan correspondant au modèle prédictif de fermeté $z=g(x,y)$ donné par l'équation (1) et sur les figures 4A à 4C la quadrique correspondant au modèle prédictif de l'adhérence de l'équation (2), pour différentes températures de trempage

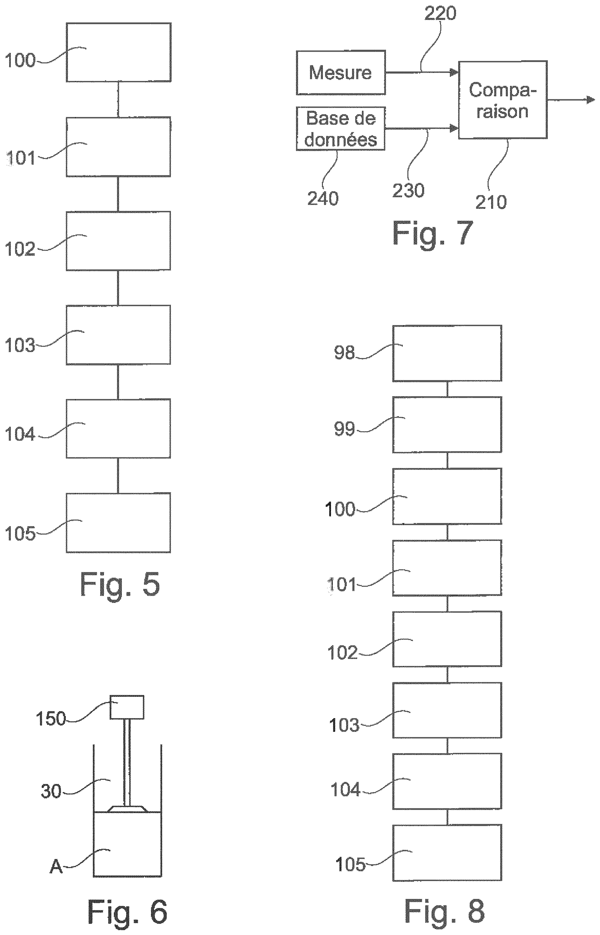

On va maintenant décrire en référence à la figure 5 un exemple de procédé de cuisson.

Selon un mode de réalisation ne faisant pas partie de l'invention mais représentent des éléments de qui sont utiles à la compréhension de l'invention, à l'étape 100, l'utilisateur entre grâce à l'interface homme machine 12 du cuiseur des informations nécessaires pour déterminer les paramètres du programme de cuisson, par exemple la variété de riz, la fermeté recherchée et le collant recherché en fin de cuisson.

Selon un mode de réalisation ne faisant pas partie de l'invention mais représentent des éléments de qui sont utiles à la compréhension de l'invention, la variété de riz est par exemple sélectionnée à l'aide d'un menu déroulant proposant plusieurs variétés, telles que riz basmati, riz thaï, riz koshihikari, riz chucheong, riz chilbo, riz arborio, entre autres.

La fermeté recherchée est par exemple sélectionnée en entrant un paramètre pouvant prendre au moins trois valeurs, telles que « ferme », « normal », « tendre ». Ce paramètre peut être réglé en continu entre des valeurs extrêmes.

L'adhérence recherchée est par exemple sélectionnée en entrant un paramètre pouvant prendre au moins trois valeurs, telles que «très collant », « collant », «non collant ». Ce paramètre peut être réglé en continu entre des valeurs extrêmes.

Une fois ces données entrées, le cuiseur 1 récupère à l'étape 101 dans la mémoire 14 le modèle prédictif pour la fermeté correspondant à la variété renseignée, et fait de même pour l'adhérence.

La fermeté et l'adhérence recherchées correspondent par exemple à des plages de valeurs prédéfinies pour les fonctions z et w ci-dessus.

Le cas échéant, la valeur sélectionnée par l'utilisateur, dans le cas d'un réglage continu, est convertie en une valeur à imposer aux fonctions z ou w pour le calcul des paramètres.

Ensuite, le cuiseur ajuste au mieux à l'étape 102 les paramètres x, y et T pour que les fonctions z et w tombent dans les plages de valeurs correspondant à la fermeté et à l'adhérence recherchées, ou aux valeurs imposées pour les fonctions z et w.

Chaque paramètre x, y et T ne peut être ajusté que dans une plage de valeurs prédéfinies. Par exemple, la température de trempage doit rester comprise entre 50 et 80°C, le ratio eau/riz entre 1.1 et 1.6 et la durée de trempage entre 10 et 50 min

Si aucune solution ne peut être trouvée pour résoudre le système d'équations (1) et (2), le cuiseur le signale à l'utilisateur et l'invite à modifier au moins l'une des valeurs de fermeté et d'adhérence précédemment sélectionnées, en faisant apparaître par exemple seulement les valeurs sélectionnables et/ou en suggérant une modification des choix de façon à trouver au moins une solution au système d'équations.

Si plusieurs solutions existent, le cuiseur 1 peut imposer par défaut la valeur d'au moins un paramètre, par exemple la température de trempage, par exemple en retenant la valeur minimale admissible, de façon à privilégier l'économie d'énergie pour la cuisson, ou en privilégiant une durée de trempage minimale pour réduire la durée totale de cuisson. Le cas échéant, le cuiseur peut inviter lors de l'étape initiale 100 l'utilisateur à entrer une préférence relative à une économie d'énergie, par exemple un sélectionnant une option « éco », ou au temps de cuisson, par exemple en sélectionnant une fonction « express », ou encore relative au meilleur potentiel nutritionnel, en sélectionnant une fonction « nutritionnel ».

Une fois les valeurs x, y et T déterminées, le cuiseur 1 peut afficher au moins une information relative au programme de cuisson qu'il va suivre à l'étape 103 et indiquer à l'utilisateur la quantité d'eau qu'il doit introduire dans la cuve par rapport à la quantité de riz prévue, qui correspond à la valeur du ratio eau/riz x solution du système d'équations (1) et (2). L'utilisateur peut s'aider pour ce faire d'un verre doseur.

Le cuiseur 1 peut attendre la confirmation par l'utilisateur du remplissage de la cuve avec les quantités d'eau et de riz prévues, avant le démarrer le cycle hydro-thermique de cuisson à l'étape 104.

La cuisson est réalisée avec une phase de trempage à la température T précédemment déterminée, pendant la durée y solution du système d'équations (1) et (2).

A la fin de la cuisson, le cuiseur 1 avertit l'utilisateur à l'étape 105, par exemple en émettant un signal sonore et/ou lumineux.

Dans une variante de réalisation, selon l'invention, le cuiseur 1 est agencé pour reconnaître automatiquement la variété de l'aliment, ou la classe d'aliment qui présente un comportement similaire à la cuisson, et sélectionner le ou les modèles prédictifs correspondant à la variété identifiée.

Pour reconnaître automatiquement l'aliment, le cuiseur comporte des moyens d'analyse 150 d'un échantillon de l'aliment, voire de l'aliment placé dans l'enceinte de cuisson.

Le cuiseur 1 comporte selon l'invention une enceinte d'analyse 30, comme illustré à la figure 1, à côté de l'enceinte de cuisson 3, pour recevoir un échantillon de l'aliment en vue de déterminer sa variété.

Les moyens d'analyse 150 peuvent être disposés au moins partiellement dans le couvercle 6 de façon à faire face à l'échantillon d'aliment A placé dans l'enceinte, comme représenté schématiquement à la figure 6.

Les moyens d'analyse peuvent comporter un texturomètre qui mesure la force de gonflement de l'aliment.

Le résultat 220 de cette mesure peut être comparé à une étape 210 à des données de référence 230 provenant d'une base de données pour diverses variétés répertoriées par le cuiseur 1, comme illustré à la figure 7. Différentes variétés de riz présentent lors du trempage des forces de gonflement différentes, ce qui permet de les différencier.

Une fois la variété identifiée, le cuiseur 1 peut charger le ou les modèles prédictifs correspondants.

La figure 8 représente une succession d'étapes d'une variante du procédé de la figure 5, mises en œuvre dans le cas où le cuiseur détermine automatiquement la variété d'aliment.

Les étapes 100 à 105 sont reprises, mais précédées par des étapes 98 et 99.

On suppose que l'utilisateur souhaite utiliser la fonction d'analyse par le cuiseur de l'aliment.

A l'étape 98, le cuiseur 1 affiche des informations guidant l'utilisateur dans la réalisation de l'analyse préalable. Par exemple, il rappelle à l'utilisateur les actions à effectuer pour que l'analyse puisse avoir lieu, comme par exemple introduire une quantité prédéfinie d'aliment dans l'enceinte de mesure et refermer le couvercle.

A l'étape 99, le cuiseur signale que l'analyse a été effectuée, et peut éventuellement afficher le résultat de l'analyse, et notamment la variété d'aliment qui a été détectée.

A l'étape 100, le cuiseur peut inviter l'utilisateur à entrer des préférences de fermeté et de collant, comme décrit précédemment.

Les étapes 101 à 105 peuvent se dérouler comme décrit précédemment.

L'invention n'est pas limitée aux exemples qui viennent d'être décrits mais est définie par les revendications.

Par exemple, les moyens d'analyse sont agencés pour mesurer un taux de gonflement et/ou une vitesse de gonflement de l'aliment au cours d'une phase de trempage, et comparer le taux et/ou la vitesse mesurés à des données de référence correspondant à des variétés connues.

Le taux de gonflement et/ou la vitesse de gonflement peuvent être mesurés alors que l'aliment est déjà dans l'enceinte de cuisson, par exemple par une mesure optique de la variation du niveau de l'aliment au cours de la phase de trempage. Cette variation peut se mesurer par exemple à l'aide d'un capteur infrarouge placé dans le couvercle du cuiseur.

Il est possible de discriminer entre les variétés de riz en comparant leurs cinétiques de gonflement lors de la phase de trempage.

La mesure du taux de gonflement ou de la vitesse de gonflement peut encore se faire dans l'enceinte d'analyse, en y introduisant l'aliment avec de l'eau. Dans ce cas, l'enceinte d'analyse peut être portée à une température de gélatinisation de l'aliment, afin de provoquer son gonflement.

## Revendications

1. Procédé de cuisson d'un aliment d'une variété prédéterminée, notamment de riz, en présence d'eau dans une enceinte de cuisson (3) d'un cuiseur, dans lequel un programme de cuisson de l'aliment est déterminé automatiquement puis le cuiseur sélectionne un ou des modèles prédictifs correspondant à la variété identifiée, et/ou un programme de cuisson de l'aliment est proposé et/ou rendu sélectionnable pour l'utilisateur par un circuit de contrôle (10) du cuiseur, au moins en partie sur la base d'un modèle mathématique prédictif du comportement d'au moins un paramètre organoleptique de l'aliment, et d'une valeur recherchée pour ledit paramètre, le modèle mathématique prédictif étant fonction au moins d'un ratio eau/aliment initial dans l'enceinte de cuisson, le ratio eau/aliment initial en volume étant compris entre 1.1 et 1.6, le modèle mathématique prédictif étant multi-variable avec des contraintes imposées aux valeurs des variables qui sont solution du modèle prédictif et fonction d'une durée de trempage de l'aliment et/ou de la température de trempage,

**caractérisé en ce qu'**il comporte une étape de détermination automatique de la variété de l'aliment ou son rapprochement d'une variété similaire par son comportement à la cuisson, dans laquelle sont utilisés des moyens d'analyse (150) d'un échantillon de l'aliment, voire de l'aliment à placer dans l'enceinte de cuisson (3), les moyens d'analyse (150) comportant une enceinte d'analyse (30), disposée à côté de l'enceinte de cuisson (3), pour recevoir un échantillon de l'aliment.

2.  Procédé selon la revendication 1, ledit paramètre étant un paramètre de texture.

3.  Procédé selon la revendication 2, ledit paramètre étant choisi parmi la fermeté, le collant, la brillance, l'élasticité, l'adhésivité, ou la cohésion de l'aliment, étant de préférence la fermeté de l'aliment ou le collant de l'aliment.

4.  Procédé selon l'une quelconque des revendications 1 à 3, le modèle mathématique étant de la forme z = z(x, y), notamment z = ax + by +c, où x désigne le ratio eau/aliment initial, y désigne la durée de trempage et z la fermeté.

5.  Procédé selon la revendication 4, l'aliment étant du riz, b et c étant des constantes positives et a une constante négative.

6.  Procédé selon l'une quelconque des revendications 1 à 3, le modèle mathématique étant de la forme w = f(x, y, T), notamment w = ax + by +c xy +dT +e, où x désigne le ratio eau/aliment initial, T la température de trempage, y la durée de trempage, et w le collant.

7.  Procédé selon la revendication 6, l'aliment étant du riz, les constantes c et e étant négatives et les constantes a, b et d étant positives.

8.  Procédé selon l'une quelconque des revendications précédentes, dans lequel on permet à l'utilisateur de sélectionner la fermeté recherchée après cuisson, notamment par incréments, en particulier avec plus de 3 valeurs, ou de façon continue.

9.  Procédé selon l'une quelconque des revendications précédentes, dans lequel on permet à l'utilisateur de sélectionner le collant recherché après cuisson, notamment par incréments, en particulier avec plus de 3 valeurs, ou de façon continue.

10.  Procédé selon la revendication précédente, dans lequel on impose à la température de trempage, lorsque présente dans le modèle prédictif utilisé, de rester comprise entre 50 et 80°C.

11.  Procédé selon la revendication 10, dans lequel on impose à la durée de trempage d'être comprise entre 10 et 50 min.

12.  Procédé selon l'une quelconque des revendications précédentes, l'aliment étant du riz, le trempage du riz s'effectuant à une température prédéfinie et pendant une durée déterminée automatiquement en fonction d'une fermeté et/ou d'un collant recherché, en appliquant au moins un modèle mathématique prédictif reliant la durée de trempage à la fermeté et/ou au collant en fin de cuisson.

**Patentansprüche**

1.  Verfahren zum Kochen eines Nahrungsmittels einer vorbestimmten Art, insbesondere Reis, bei Vorhandensein von Wasser in einem Kochbehälter (3) eines Kochers, wobei ein Kochprogramm des Nahrungsmittels automatisch bestimmt wird, der Kocher dann ein oder mehrere Vorhersagemodelle entsprechend der identifizierten Art auswählt, und/oder über eine Steuerschaltung (10) des Kochers ein Kochprogramm des Nahrungsmittels vorgeschlagen und/oder für den Benutzer auswählbar gemacht wird, mindestens teilweise auf der Grundlage eines mathematischen Vorhersagemodells des Verhaltens mindestens eines organoleptischen Parameters des Nahrungsmittels und eines für den Parameter angestrebten Werts, wobei das mathematische Vorhersagemodell mindestens von einem anfänglichen Wasser-Nahrungsmittel-Verhältnis im Kochbehälter abhängt, wobei das volumenmäßige anfängliche Wasser-Nahrungsmittel-Verhältnis zwischen 1,1 und 1,6 beträgt, wobei das mathematische Vorhersagemodell multivariabel mit vorgeschriebenen Einschränkungen auf die Variablenwerte ist, die das Vorhersagemodell lösen, und von einer Einweichzeit des Nahrungsmittels und/oder der Einweichtemperatur abhängt, **dadurch gekennzeichnet, dass** es einen Schritt des automatischen Bestimmens der Nahrungsmittelart oder seiner Annäherung an eine ähnliche Art über dessen Verhalten beim Kochen umfasst, wobei Analysemittel (150) einer Probe des Nahrungsmittels, sogar des in den Kochbehälter (3) zu platzierenden Nahrungsmittels verwendet werden, wobei die Analysemittel (150) einen Analysebehälter (30) umfassen, der neben dem Kochbehälter (3) angeordnet ist, um eine Probe des Nahrungsmittels aufzunehmen.

2. Verfahren nach Anspruch 1, wobei der Parameter ein Texturparameter ist.

3. Verfahren nach Anspruch 2, wobei der Parameter aus der Festigkeit, der Klebrigkeit, dem Glanz, der Elastizität, der Haftfähigkeit oder dem Zusammenhaften des Nahrungsmittels, vorzugsweise der Festigkeit des Nahrungsmittels oder der Klebrigkeit des Nahrungsmittels ausgewählt wird.

4. Verfahren nach einem der Ansprüche 1 bis 3, wobei das mathematische Modell von der Form $z = z(x, y)$ ist, insbesondere $z = ax + by + c$, wobei x das anfängliche Wasser-Nahrungsmittel-Verhältnis bezeichnet, y die Einweichdauer und z die Festigkeit bezeichnet.

5. Verfahren nach Anspruch 4, wobei das Nahrungsmittel Reis ist, b und c positive Konstanten sind und a eine negative Konstante ist.

6. Verfahren nach einem der Ansprüche 1 bis 3, wobei das mathematische Modell von der Form $w = f(x, y, T)$ ist, insbesondere $w = ax + by + c\,xy + dT + e$, wobei x das anfängliche Wasser-Nahrungsmittel-Verhältnis, T die Einweichtemperatur, y die Einweichdauer und w die Klebrigkeit bezeichnet.

7. Verfahren nach Anspruch 6, wobei das Nahrungsmittel Reis ist, die Konstanten c und e negativ sind und die Konstanten a, b und d positiv sind.

8. Verfahren nach einem der vorstehenden Ansprüche, wobei dem Benutzer erlaubt wird, die nach einem Kochvorgang angestrebte Festigkeit insbesondere stufenweise, im Besonderen mit mehr als 3 Werten oder auf kontinuierliche Weise auszuwählen.

9. Verfahren nach einem der vorstehenden Ansprüche, wobei dem Benutzer erlaubt wird, die nach einem Kochvorgang angestrebte Klebrigkeit insbesondere stufenweise, im Besonderen mit mehr als 3 Werten oder auf kontinuierliche Weise auszuwählen.

10. Verfahren nach dem vorstehenden Anspruch, wobei vorgeschrieben wird, dass die Einweichtemperatur, wenn sie im verwendeten Vorhersagemodell vorhanden ist, zwischen 50 und 80 °C verbleibt.

11. Verfahren nach Anspruch 10, wobei vorgeschrieben wird, dass die Einweichdauer zwischen 10 und 50 min beträgt.

12. Verfahren nach einem der vorstehenden Ansprüche, wobei das Nahrungsmittel Reis ist, das Einweichen des Reises bei einer vorab definierten Temperatur und während einer automatisch bestimmten Dauer in Abhängigkeit von einer Festigkeit und/oder einer angestrebten Klebrigkeit ausgeführt wird, indem mindestens ein mathematisches Vorhersagemodell angewendet wird, das die Einweichdauer mit der Festigkeit und/oder der Klebrigkeit am Ende eines Kochvorgangs verknüpft.

**Claims**

1. Method for cooking a food of a predetermined variety, in particular rice, in the presence of water in a cooking vessel (3) of a cooker, wherein a programme for cooking the food is determined automatically, then the cooker selects one or more predictive models corresponding to the identified variety, and/or a programme for cooking the food is proposed and/or made selectable for the user by a control circuit (10) of the cooker, at least partially based on a predictive mathematic model of the behaviour of at least one organoleptic parameter of the food, and a sought value for said perimeter, the predictive mathematic model being a function of at least one initial water/food ratio in the cooking vessel, the initial water/food ratio in volume being between 1.1 and 1.6, the predictive mathematic model being multi-variable with constraints imposed on the values of the variables which are a solution of the predictive model and according to an immersion duration of the food and/or of the immersion temperature,

**characterised in that** it comprises a step of automatically determining the variety of the food or its closeness to a similar variety by its behaviour when cooking, wherein means for analysing (150) a sample of the food are used, even the food to be placed in the cooking vessel (3), the analysis means (150) comprising an analysis vessel (30), disposed on the side of the cooking vessel (3), to receive a sample of the food.

2. Method according to claim 1, said parameter being a texture parameter.

3. Method according to claim 2, said parameter being chosen from among firmness, stickiness, shine, elasticity, adhesiveness, or cohesion of the food, preferably being firmness of the food or the stickiness of the food.

4. Method according to any one of claims 1 to 3, the mathematical model being of the form $z = z(x, y)$, in particular $z = ax + by + c$, where x means the initial water/food ratio, y means the immersion duration, and z, the firmness.

5. Method according to claim 4, the food being rice, b and c being positive constants and a, a negative constant.

6. Method according to any one of claims 1 to 3, the mathematical model being of the form $w = f(x, y, T)$, in particular $w = ax + by + c\,xy + dT + e$, where x means the initial water/food ratio, T the immersion temperature, y the immersion duration, and w, the stickiness.

7. Method according to claim 6, the food being rice, the constants c and e being negative and the constants a, b and d being positive.

8. Method according to any one of the preceding claims, wherein the user is permitted to select the firmness sought after cooking, in particular by increments, in particular with more than 3 values, or continuously.

9. Method according to any one of the preceding claims, wherein the user is permitted to select the stickiness sought after cooking, in particular by increments, in particular with more than 3 values, or continuously.

10. Method according to the preceding claim, wherein it is imposed on the immersion temperature, when present in the predictive model used, to remain between 50 and 80°C.

11. Method according to claim 10, wherein it is imposed on the immersion temperature to be between 10 and 50 min.

12. Method according to any one of the preceding claims, the food being rice, the immersion of the rice being done at a predefined temperature and for a duration determined automatically according to a sought firmness and/or stickiness, by applying at least one predictive mathematical model connecting the immersion duration to the firmness and/or to the stickiness at the end of cooking.

Fig. 1

Fig. 2

Modèle prédictif de la fermeté

Fig. 3

Modèle prédictif de l'adhérence:trempage 70°C

Fig. 4A

Modèle prédictif de l'adhérence à 60°C

Fig. 4B

Modèle prédictif de l'adhérence à 75°C

Fig. 4C

EP 3 912 520 B1

Fig. 5

Fig. 6

Fig. 7

Fig. 8

11

## RÉFÉRENCES CITÉES DANS LA DESCRIPTION

**Documents brevets cités dans la description**

- WO 2012056173 A1
- WO 2016083716 A
- FR 2996986
- US 20110003048 A